# EUROPÄISCHE PATENTSCHRIFT

(11) **EP 0 918 655 B1**
(45) Veröffentlichungstag und Bekanntmachung des Hinweises auf die Patenterteilung: **28.11.2001**
(21) Anmeldenummer: 97944770.3
(22) Anmeldetag: 20.08.1997
(51) Int. Cl.: B60D 1/52, F16B 21/02, F16B 21/04

(54) **KUPPLUNGSANORDNUNG FÜR EIN FAHRZEUG**
COUPLING DEVICE FOR A VEHICLE
DISPOSITIF D'ACCOUPLEMENT POUR UN VEHICULE

(30) Priorität: 20.08.1996 DE 29614444 U
(43) Veröffentlichungstag der Anmeldung: 02.06.1999
(73) Patentinhaber: Rumpp, Gerhard, D-82266 Inning (DE)
(72) Erfinder: Rumpp, Gerhard, D-82266 Inning (DE)
(74) Vertreter: Kuhl, Dietmar
(86) Internationale Anmeldenummer: EP9704529
(87) Internationale Veröffentlichungsnummer: WO9807587

(56) Entgegenhaltungen:
- EP-A- 0 568 921
- WO-A-90/09823
- WO-A-91/11626
- DE-A- 3 601 505
- US-A- 3 227 029

## Beschreibung

Die Erfindung bezieht sich auf eine Kupplungsanordnung für ein Zusatzgerät an einem Fahrzeug gemäß dem Oberbegriff des Patentanspruchs 1.

Eine solche, aus der EP 0 568 921 A1 bekannte Kupplungsanordnung umfasst zwei kuppelbare Kupplungselemente. Das eine Kupplungselement weist vier radial nach außen stehende Vorsprünge auf, die in mit Hinterschneidungen versehenen radial einwärts verlaufenden Wandabschnitten so in Eingriff bringbar sind, dass beim Verdrehen der Kupplungselemente zueinander die Vorsprünge die Wandabschnitte in der Art eines Bajonettverschlusses hintergreifen.

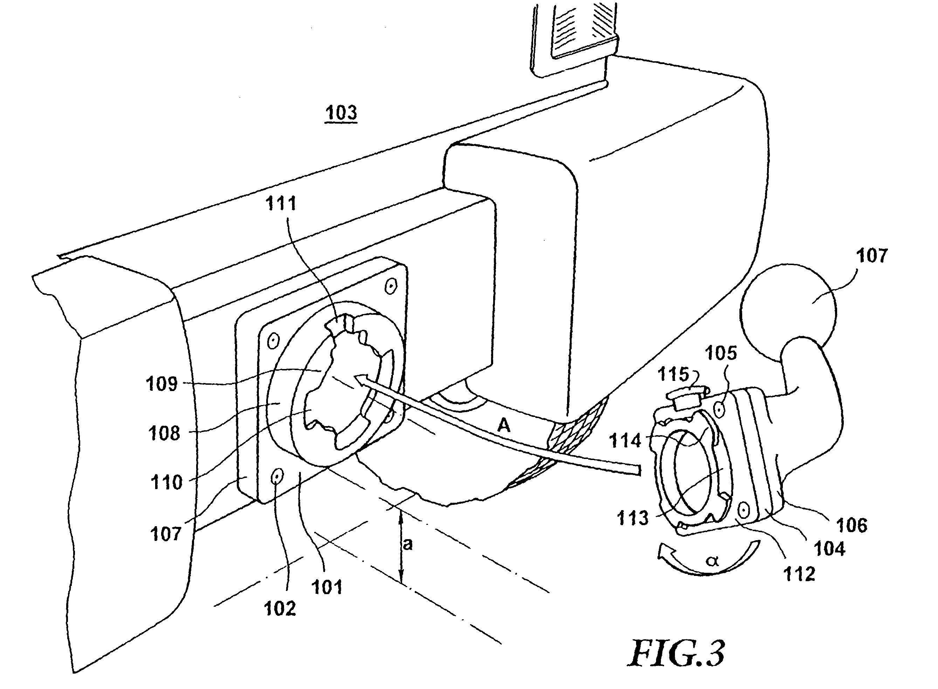

Eine weitere, allgemein bekannte Kupplungsanordnung, die in Form eines Bajonettverschlusses ausgebildet ist, wird anhand von Fig. 3 näher erläutert.

Ein stationäres Kupplungsstück 101 ist mittels Schrauben 102 an der Heckseite des Fahrzeuges befestigt. Ein aufsetzbares Kupplungsstück 104, das zur Verbindung mit dem stationären Kupplungsstück 101 vorgesehen ist, ist mittels Schrauben 105 mit einer Anhängerkupplung 106, die einen Kugelkopf 107 trägt, verbunden.

Das stationäre Kupplungsstück 101 besteht aus einer Grundplatte 107, mit der ein Außenring 108 an einer Axialseite fest verbunden ist. An dem Außenring 108 sind von der Grundplatte 107 beabstandet und radial zur Mittellinie weisend Verschlussklauen 109 angeordnet. Zwischen den Verschlussklauen 109 ergeben sich Ausnehmungen 110. Weiterhin ist am Außenring 108 in einem Axialbereich eine Aussparung 111 ausgebildet. Das aufsetzbare Kupplungsstück 104 weist eine Grundplatte 112 und einen mit dieser fest verbundenen Innenring 113 auf. Der Außendurchmesser des Innenrings 113 ist an den Innendurchmesser des Außenrings 108 so angepasst, dass der Innenring 113 den Außenring 108 führt. Der Innenring 113 weist von der Grundplatte 112 beabstandet und radial von der Mittellinie wegweisend Riegelklauen 114 auf, die in ihrer Anzahl (in der vorliegenden Ausführungsform sind vier Klauen vorgesehen) der Anzahl der Verschlussklauen 109 am Außenring 108 entsprechen. Die Breite der Ausnehmungen 110 ist so dimensioniert, dass die Klauen 114 in diese einsetzbar sind. An der Grundplatte 112 des aufsetzbaren Kupplungsstückes 104 ist ein federbelasteter Riegel 115 angeordnet, der das aufsetzbare Kupplungsstück 104 gegen eine radiale Verdrehung gegenüber dem stationären Kupplungsstück 101 sichert.

Nachstehend wird das Zusammensetzen dieser Kupplungsanordnung beschrieben. Zuerst wird das aufsetzbare Kupplungsstück 104 um einen Winkel α verdreht. Durch Bewegen in Richtung des Pfeiles A wird das aufsetzbare Kupplungsstück 104 zum stationären Kupplungsstück 101 herangeführt, wobei die Riegelklauen 114 in die Ausnehmungen 110 des Außenringes 108 eintreten. Durch Zurückdrehen des aufsetzbaren Kupplungsstückes 104 um den Winkel α hintergreifen die Riegelklauen 114 des Innenringes 113 die Verschlußklauen 109 des Außenringes 108 in der Art eines Bajonettverschlusses und der Riegel 115 rastet in die Aussparung 111, wodurch das aufsetzbare Kupplungsstück 104 gegen Verdrehen gesichert wird.

Diese Kupplungsanordnung, die am Fahrzeugheck angebracht ist, dient insbesondere zur Aufnahme von Zugkräften und in geringem Maße auch zur Aufnahme von Biegemomenten. Eine Verwendung dieser Kupplungsanordnung für Vorsatzgeräte, wie z.B. Schneepflüge, Erdbohrer, Kehrmaschinen und Rammen, die vorwiegend im Frontbereich des Fahrzeuges angekuppelt werden, ist aufgrund der bei diesen Vorsatzgeräten wirkenden großen Biegemomente nicht geeignet.

Die Kupplung kann auch nicht beliebig in ihren Außenabmessungen vergrößert werden, da vorgegebene Parameter, z.B. das Maß a für die Bodenfreiheit, dieses nicht zulassen.
Der Erfindung liegt die Aufgabe zugrunde, eine leicht zusammensetzbare Kupplungsanordnung zu schaffen, die große Biegemomente aufnimmt.

Diese Aufgabe wird durch die im kennzeichnenden Teil des Patentanspruchs 1 angegebenen Merkmale gelöst.

Erfindungsgemäß sind an einem der Kupplungsstücke zusätzlich mindestens zwei radial einwärts verlaufende Zusatzriegelklauen angeordnet, die in Radialrichtung von den Riegelklauen versetzt sind und korrespondierend dazu am anderen der Kupplungsstücke zusätzlich mindestens zwei radial auswärts verlaufende Zusatz-Verschlußklauen angeordnet, die in Radialrichtung nach außen von den Verschlußklauen versetzt sind. Durch diese Anordnung können insbesondere die radial außenliegenden miteinander in Eingriff befindlichen Klauen große Biegemomente aufnehmen und die radial innenliegenden Klauen insbesondere Zug- und Druckkräfte aufnehmen.

Weiterbildungen der Erfindung sind in den Unteransprüchen angegeben.

Die Erfindung wird anhand der Zeichnungen näher erläutert. Darin zeigen:
Fig. 1 eine Perspektivansicht der erfindungsgemäßen Kupplungsanordnung, wobei die beiden Kupplungsstücke getrennt voneinander positioniert sind,
Fig. 2 eine Verriegelung der beiden Kupplungsstücke,
Fig. 3 eine Perspektivansicht einer herkömmlichen Kupplungsanordnung, wobei beide Kupplungsstücke getrennt voneinander positioniert sind,
Fig. 4 eine Draufsicht auf eine Grundplatte mit einer Verriegelungsanordnung in einer weiteren Ausführungsform der Erfindung,
Fig. 5 eine Seitenansicht im Halbschnitt von Fig. 4,
Fig. 6 eine Schnittansicht der Verriegelungsanordnung, die entlang der Linie A-A von Fig. 4 verläuft,
Fig. 7 eine vergrößerte Seitenansicht der Verriegelungsanordnung,
Fig. 8 eine Schnittansicht eines Schwenkbügels der Verriegelungsanordnung, und
Fig. 9 eine Draufsicht auf den Schwenkbügel von Fig. 8.

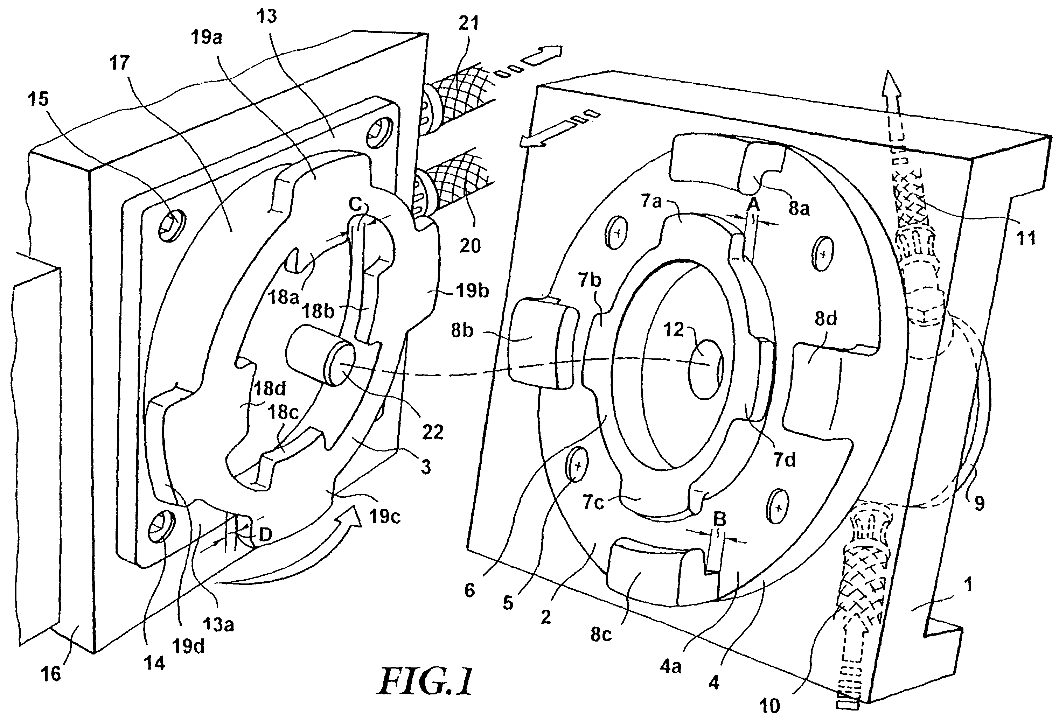

Wie in Fig. 1 dargestellt ist, trägt eine vordere Traverse 1 des Fahrzeuges ein stationäres Kupplungsstück 2, das mit einem aufsetzbaren Kupplungsstück 3 in Eingriff bringbar ist.

Das stationäre Kupplungsstück 2 weist eine Grundplatte 4 auf, die mittels Schrauben 5 an der vorderen Traverse 1 befestigt ist. Ein Innenring 6 ist mit der Grundplatte 4 verbunden und weist radial auswärts verlaufende Riegelklauen 7 (in dieser Ausführungsform vier Riegelklauen 7a, 7b, 7c, 7d) auf, die in gleichen Abständen an der Außenumfangsfläche des Innenringes 6 ausgebildet sind. Die Grundplatte 4, die in dieser Ausführungsform rund ausgebildet ist, die aber auch eine andere Konfiguration haben kann, weist in Radialrichtung von den Riegelklauen 7 beabstandet und diesen gegenüberliegend vier radial einwärts verlaufende Zusatz-Riegelklauen 8 (in dieser Ausführungsform vier Zusatz-Riegelklauen 8a, 8b, 8c, 8d) auf.

In dieser Ausführungsform ist der Innenring 6 mit der Grundplatte 4 befestigt oder einstückig mit ihr ausgebildet.
Die Riegelklauen 7 haben eine vorbestimmte Dicke und bilden zwischen ihren axialen Innenflächen und einer Außenfläche 4a der Grundplatte 4 einen Zwischenraum A, wobei der Zwischenraum A in Form eines Ringsektors ausgebildet ist.

Die Zusatz-Riegelklauen 8 haben ebenfalls eine vorbestimmte Dicke und bilden zwischen ihren axialen Innenflächen und der Außenfläche 4a der Grundplatte 4 einen Zwischenraum B, wobei dieser Zwischenraum B ebenfalls in Form eines Ringsektors ausgebildet ist.

Auf der rückwärtigen Seite der Grundplatte 4 ist zentrisch ein Ventil 9 befestigt, an dem eine Eingangsleitung 10 und eine Ausgangsleitung 11 angeschlossen ist. Die Eingangsleitung 10 und die Ausgangsleitung 11 dienen zum Transport eines Arbeitsmediums, z.B. von Hydraulikflüssigkeit oder Druckluft.

Zentrisch zum Innenring 6 ist eine Durchgangsbohrung 12 vorgesehen, die die Grundplatte 4 durchdringt. In einem der Außenfläche 4a zugewandten Bereich ist die Durchgangsbohrung 12 sich konisch verjüngend, trichterartig ausgebildet.

Ein Ventilkolben (nicht gezeigt) des Ventils 9 liegt einem dem konischen Bereich gegenüberliegenden Ende der Durchgangsbohrung 12 gegenüber oder ragt in diese hinein. Der Ventilkolben ist in Richtung zu dem konischen Bereich hin federbelastet, wobei der Ventilkolben durch einen Anschlag (nicht gezeigt) in einer Endstellung gehalten wird. In dieser Endstellung sperrt der Ventilkolben vollständig den Durchfluß durch das Ventil 9. Damit ist die Sicherheit gegeben, daß ein Arbeitsmedium nur durch das Ventil 9 strömen kann, wenn das aufsetzbare Kupplungsstück 3 mit dem stationären Kupplungsstück 2 gekuppelt ist.

In einer anderen Ausführungsform ist statt des Ventils 9 ein elektrischer oder elektronischer Schalter, dessen Schaltstößel in die Durchgangsbohrung 12 hineinragt oder ein Linearpotentiometer angeordnet, dessen Spannungsabgriff in Form eines Schaltstößels ausgebildet ist und in die Durchgangsbohrung 12 hineinragt. Die Leitungen 10, 11, 20, 21 für flüssige oder gasförmige Medien sind in dieser Ausführungsform durch elektrische Leitungen ersetzt.

Das aufsetzbare Kupplungsstück 3 weist eine Geräteplatte 13 auf, in der Bohrungen 14 ausgebildet sind, die Schrauben 15, bevorzugterweise Imbusschrauben, aufnehmen, die die Geräteplatte 13 mit einem Zusatzgerät 16 verbinden. Das Zusatzgerät 16 ist bevorzugterweise für die Befestigung an der Frontseite des Fahrzeugs vorgesehen und ist z.B. ein Schneepflug, ein Erdbohrer, eine Kehrmaschine, eine Ramme, eine Kugelkopfkupplung oder eine Maulkupplung. Im Bedarfsfall kann das stationäre Kupplungsstück 2 auch an der Heckseite des Fahrzeuges angeordnet sein, um entsprechende Zusatzgeräte 16 zu koppeln.

Ein Außenring 17 ist mit der Geräteplatte 13 befestigt oder einstückig mit ihr ausgebildet und weist radial einwärts verlaufende Verschlußklauen 18 (in dieser Ausführungsform vier Verschlußklauen 18a, 18b, 18c, 18d) auf, die in gleichen Abständen an der Innenumfangsfläche des Außenringes 17 ausgebildet sind. An der Außenumfangsfläche des Außenringes 17 sind vier radial auswärts verlaufende Zusatz-Verschlußklauen 19 (in dieser Ausführungsform vier Zusatz-Verschlußklauen 19a, 19b, 19c, 19d) ausgebildet, die zu den Verschlußklauen 18 in Radialrichtung gegenüberliegend ausgebildet sind.

In einer alternativen Ausführungsform kann der Außenring 17 drehbar mit der Geräteplatte 13 verbunden sein. An dem Außenumfang des Außenrings 17 sind Abflachungen oder andere geeignete Werkzeugeingriffsflächen angeordnet, um ein Werkzeug, z.B. einen Maulschlüssel, zum Drehen des Außenringes 17 ansetzen zu können.

Die Verschlußklauen 18 haben eine vorbestimmte Dicke und bilden zwischen ihren axialen Innenflächen und einer Innenfläche 13a der Geräteplatte 13 einen Zwischenraum C, wobei der Zwischenraum C in Form eines Ringsektors ausgebildet ist.

Die Zusatz-Verschlußklauen 19 haben ebenfalls eine vorbestimmte Dicke und bilden zwischen ihren axialen Innenflächen und der Innenfläche 13a der Geräteplatte 13 einen Zwischenraum D, wobei dieser Zwischenraum D ebenfalls in Form eines Ringsektors ausgebildet ist.

In einer bevorzugten Ausgestaltung haben die Riegelklauen 7, die Zusatz-Riegelklauen 8, die Verschlußklauen 18 und die Zusatz-Verschlußklauen 19 eine gleiche Dicke, die im wesentlichen den Zwischenräumen A, B, C, D entsprechen.

In einer alternativen, nicht gezeigten Ausführungsform ist eine der Riegelklauen 7, eine der Verschlußklauen 18, eine der Zusatz-Riegelklauen 8 oder eine der Zusatz-Verschlußklauen 19 dicker ausgebildet als die übrigen entsprechenden Klauen, und eine der korrespondierenden Verschlußklauen 18, der Riegelklauen 7, der Zusatz-Verschlußklauen 19 oder der Verschlußklauen 18 ist dünner ausgebildet als die übrigen Klauen, so daß damit auf einfache Weise erreicht wird, daß das Zusatzgerät 16 nur in einer vorbestimmten Lage mit dem Fahrzeug kuppelbar ist.

In den oben beschriebenen Ausführungsformen sind die Dicken der Klauen 7; 8; 18; 19 und die Zwischenräume A, B, C, D so abgestimmt, daß die Außenflächen der Riegelklauen 7 und der Zusatz-Riegelklauen 8 an der Innenfläche 13a der Geräteplatte 13 anliegen und daß die Außenflächen der Verschlußklauen 18 und der Zusatz-Verschlußklauen 19 an der Außenfläche 4a der Grundplatte 4 anliegen. Dadurch können einerseits große Kräfte und Momente vom aufsetzbaren Kupplungsstück 3 auf das stationäre Kupplungsstück 2 übertragen werden und andererseits unerwünschte Schwingungen zwischen dem aufsetzbaren Kupplungsstück 3 und dem stationären Kupplungsstück 2 verbunden mit einer Lärmemission vermieden werden.

In einer anderen Ausführungsform haben die Riegelklauen 7 und korrespondierend dazu die Verschlußklauen 18 sowie die Zusatz-Riegelklauen 8 und korrespondierend dazu die Zusatz-Verschlußklauen 19 eine stetig anwachsende Dicke, um beim Verdrehen des aufsetzbaren Kupplungsstücks 3 gegenüber dem stationären Kupplungsstück 2 in der Art einer Schraubverbindung die Außenflächen der Riegelklauen 7 und der Zusatz-Riegelklauen 8 gegen die Innenfläche 13a der Geräteplatte 13 zu pressen und die Außenflächen der Verschlußklauen 18 und der Zusatz-Verschlußklauen 19 gegen die Außenfläche 4a der Grundplatte 4 zu pressen. Durch das Verspannen der Außenflächen der Klauen gegen die Innenfläche 13a der Geräteplatte 13 bzw. der Außenfläche 4a der Grundplatte 4 wird eine besonders sichere Übertragung von Kräften bzw. Momenten vom aufsetzbaren Kupplungsstück 3 auf das stationäre Kupplungsstück 2 ermöglicht.
Der Innendurchmesser des Außenrings 17 ist mit dem Außendurchmesser des Innenrings 6 so abgestimmt, daß beim axialen Zusammensetzen des aufsetzbaren Kupplungsstücks 2 mit dem stationären Kupplungsstück 3 der Innenring 6 den Außenring 17 führt.

Das Zusatzgerät 16 weist eine Zuleitung 20 und eine Ableitung 21 auf. Zentrisch zum Außenring 17 ist ein Steuerstößel 22 angeordnet, dessen Länge von der Art des Zusatzgerätes 16 abhängt, was nachstehend näher erläutert werden wird.

Das Montieren des aufsetzbaren Kupplungsstückes 3 mit dem stationären Kupplungsstück 2 wird nachstehend erläutert. Das aufsetzbare Kupplungsstück 3 wird um einen Winkelbetrag verdreht, so daß die Verschlußklauen 18 in Freiräume zwischen die Riegelklauen 7 treten und daß die Zusatz-Verschlußklauen 19 in Freiräume zwischen den Zusatz-Riegelklauen 8 treten. Durch die Konusform der Durchgangsbohrung 12 erfolgt eine erste Führung in Axialrichtung durch den Steuerstößel 22, der in die Durchgangsbohrung 12 eingeschoben wird. Beim weiteren Zueinanderführen in Axialrichtung des aufsetzbaren Kupplungsstücks 3 zum stationären Kupplungsstück 2 wird der Innendurchmesser des Außenringes 17 durch den Außendurchmesser des Innenringes 6 geführt.

In einer vollständig zusammengesetzten axialen Position läßt sich das aufsetzbare Kupplungsstück 3 um den Winkelbetrag zurückdrehen, wobei sich die Riegelklauen 7 und die Verschlußklauen 18 sowie die Zusatz-Riegelklauen 8 und die Zusatz-Verschlußklauen 19 in der Art eines Bajonettverschlusses gegenseitig hintergreifen.

Die radial innenliegende Verbindung der Riegelklauen 7 mit den Verschlußklauen 18 nimmt insbesondere Zug- und Druckkräfte auf, und die radial außenliegende Verbindung der Zusatz-Riegelklauen 8 mit den Zusatz-Verschlußklauen 19 nimmt insbesondere die horizontal und vertikal wirkenden großen Biegemomente auf.

Der Steuerstößel 22 mit seiner vorbestimmten Länge je nach Art des Zusatzgerätes 16 drückt gegen den Ventilkolben des Ventils 9. Durch die Länge des Steuerstößels 22 wird die Durchflußmenge des Arbeitsmediums durch das Ventil 9 reguliert. Die Eingangsleitung 10 ist mit einer fahrzeugseitig angebrachten Pumpe (nicht gezeigt) verbunden. Die Ausgangsleitung 11 steht mit der Zuleitung 20 am Zusatzgerät 16 in Verbindung. Die Ableitung 21 dient der Rückführung des Arbeitsmediums in das Kreislaufsystem.

In der anderen Ausführungsform, wo das Ventil durch einen Schalter oder durch einen Potentiometer ersetzt ist, drückt der Steuerstößel 22 mit seiner vorbestimmten Länge je nach Art des Zusatzgerätes 16 gegen den Schaltstößel, wodurch der Schalter ein- oder ausgeschaltet wird oder beim Potentiometer je nach Länge des Steuerstößels 22 der Schaltstößel des Potentiometers entsprechend verschoben wird, so daß für unterschiedliche Vorsatzgeräte z.B. unterschiedliche Spannungen über die elektrischen Leitungen dem Zusatzgerät zugeführt werden.

In einer weiteren Ausführungsform ist zur Steuerung des Zusatzgerätes 16 am ersten Kupplungsstück 2 eine elektronische Steuereinrichtung vorgesehen, die eine elektrische, hydraulische oder pneumatische Steuerung des Zusatzgerätes vornimmt. Den Zusatzgeräten entsprechende Leistungsdaten sind auf einem jeweiligen Chip gespeichert, der an dem jeweiligen Steuerstößel 22 des Zusatzgerätes 16 angeordnet ist. Die elektronische Steuereinrichtung weist eine Abtasteinrichtung auf, die die entsprechenden Kenndaten vom Chip abliest und eine Steuerung des Zusatzgerätes 16 entsprechenderweise vornimmt.

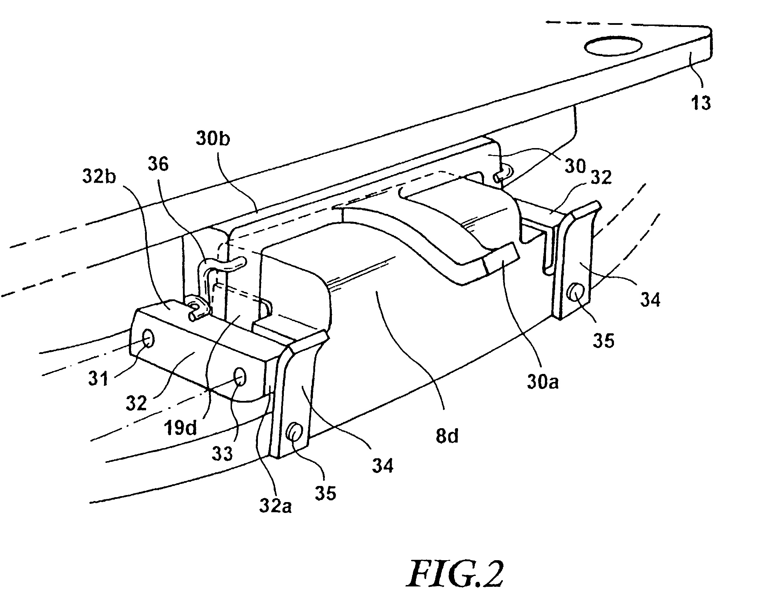

Fig. 2 zeigt eine Verriegelung, die das aufsetzbare Kupplungsstück 3 gegenüber der Verdrehung in Radialrichtung zum stationären Kupplungsstück 2 sichert.

Ein U-förmiger Verriegelungsbügel 30 ist an Seitenflächen seiner Schenkel über Achsen 31 mit Verriegelungshebeln 32 schwenkbar verbunden. Die Verriegelungshebel 32 ihrerseits sind über Achsen 33 mit Seitenflächen der Zusatz-Riegelklaue 8d schwenkbar verbunden. Zwei Blattfedern 34 sind mittels Schrauben 35 am Außenumfang der Grundplatte 4 so befestigt, daß die Blattfedern 34 jeweils gegen eine Stirnfläche 32a des Verriegelungshebels 32 drückt. Auf den Achsen 31 ist jeweils eine Drehfeder 36 gelagert, von der ein Schenkel gegen den Verriegelungshebel 32 und ein anderer Schenkel gegen den Verriegelungsbügel 30 drückt. Zur besseren Handhabung verfügt der Verriegelungsbügel 30 über einen Griff 30a. Die Breite zwischen den Schenkeln des Verriegelungsbügels 30 entspricht der Breite der Zusatz-Riegelklaue 8d bzw. der Zusatz-Verschlußklaue 19d.

Die Arbeitsweise der Verriegelung wird nachstehend beschrieben. Wenn die Zusatz-Riegelklauen 8 und die Zusatz-Verschlußklauen 19 sich gegenseitig hintergreifen und in Radialrichtung fluchten, wird der Verriegelungsbügel 30 mit dem Griff 30a über die sich hintergreifende Zusatz-Riegelklaue 8d und die Zusatz-Verschlußklaue 19d geklappt. Dabei werden die Verriegelungshebel 32 gegen die Kraft der Blattfedern 34 in die Verriegelungsposition gebracht und von diesen durch die Blattfedern 34 in dieser Position gehalten. Die Drehfedem 36 drücken den Verriegelungsbügel 30 in Richtung der Geräteplatte 13, wobei in der Verriegelungsposition eine untere Fläche eines Basisteils 30b des Verriegelungsbügels 30 der Innenfläche 13a der Geräteplatte 13 gegenübersteht. In einer bevorzugten Ausgestaltung dieser Ausführungsform ist die Dicke der Zusatz-Riegelklaue 8d so dimensioniert, daß ein Abstand zwischen der Außenfläche der Zusatz-Riegelklaue 8d und der Innenfläche 13a der Geräteplatte 13 entsteht. Das Basisteil 30b des Verriegelungsbügels 30 ist so dimensioniert, daß daß dieses den Abstand zwischen der Zusatz-Riegelklaue 8d und der Geräteplatte 13 ausfüllt und ein Verspannen des Verriegelungsbügels 30 mit der Geräteplatte 13 erfolgt.

Beim Entriegeln wird der Griff 30a niedergedrückt, wobei der Verriegelungsbügel 30 zunächst entgegen der Federkraft der Drehfedern 36 um die Achsen 31 verschwenkt werden und der Verriegelungsbügel 30 die Zusatz-Riegelklaue 8d und die Zusatz-Verschlußklaue 19d freigibt. Beim weiteren Drücken des Griffes 30a werden die Verriegelungshebel 32 entgegen der Federkraft der Blattfedern 34 um die Achsen 33 verschwenkt, bis die Blattfedern 34 an Seitenflächen 32b der Verriegelungshebel 32 anliegen. Auf diese Weise hat der Verriegelungsbügel 30 eine sichere Lage in der Entriegelungsposition.

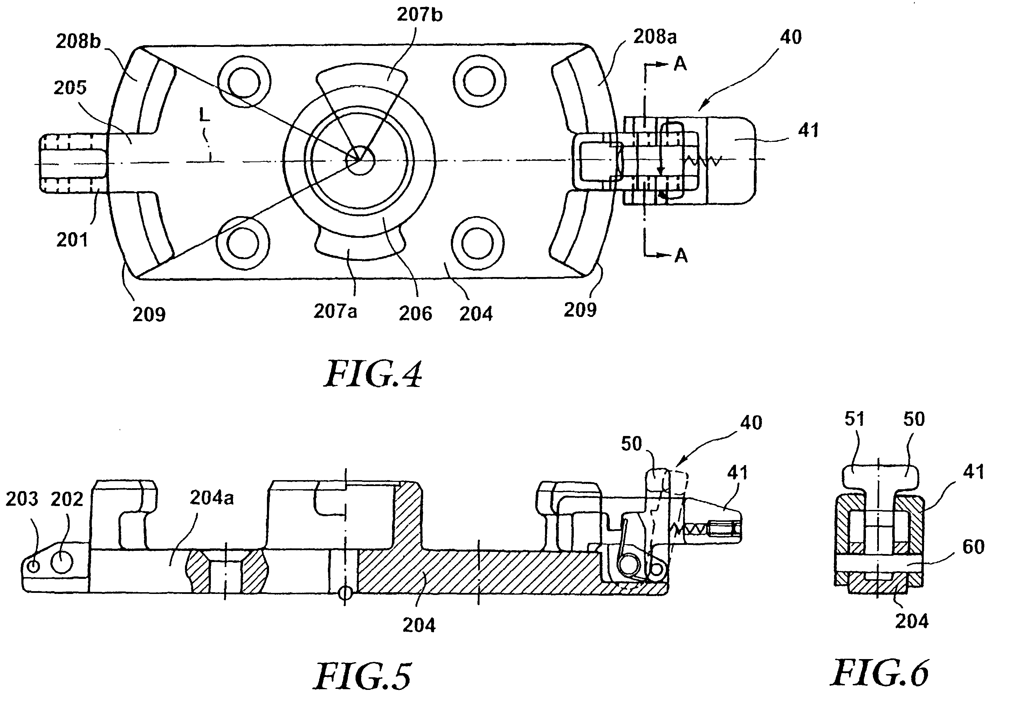

Die Erfindung ist nicht auf die beschriebenen Ausführungsformen beschränkt. So können statt der vier Klauen jeweils zwei Klauen in einem Winkel von 180° angeordnet sein (siehe z.B. Fig. 4). Eine andere Ausführungsform weist drei um jeweils 120° versetzte Klauen auf. Eine weitere Ausgestaltung sieht vor, mehr als vier Klauen zu verwenden. Auch besteht die Möglichkeit, daß die RiegelklauenNerschlußklauen eine andere Anzahl aufweisen, als die Zusatz-Riegelklauen/Zusatz-Verschlußklauen.

Eine weitere Ausgestaltung sieht vor, daß die Klauen verschiebbar an der Grundplatte 4 bzw. Geräteplatte 13 ausgebildet sind, die über Federn, z.B. Tellerfedern in axialer Richtung vorgespannt sind, um die Außenflächen der Klauen gegen die Außenfläche 4a der Grundplatte 4 bzw. die Innenfläche 13a der Geräteplatte 13 drücken.

Eine weitere Ausführungsform sieht vor, daß radial nach außen von den Zusatz-Riegelklauen 8 bzw. den Zusatz-Verschlußklauen 19 weitere Zusatz-Riegelklauen und weitere Zusatz-Verschlußklauen angeordnet sind.

Eine weitere Ausführungsform einer Verriegelungsanordnung ist in den Fig. 4 bis 9 gezeigt. Eine Grundplatte 204, die in dieser Ausführungsform langgestreckt ausgebildet ist, weist zentrisch einen Innenring 206 auf, an dem zwei, um 180° versetzte Riegelklauen 207a, 207b angeordnet sind. Schmalseiten 209 der Grundplatte 204 sind jeweils in Form eines Kreisbogenabschnitts ausgebildet und bilden den Abschluß von zwei Zusatz-Riegelklauen 208a, 208b.

Wie in der ersten Ausführungsform, haben die Riegelklauen 207 und die Zusatz-Riegelklauen 208 eine vorbestimmte Dicke und bilden zwischen ihren axialen Innenflächen und einer Außenfläche 204a der Grundplatte 204 einen Zwischenraum, der in Form eines Ringsektors ausgebildet ist.

Von den Schmalseiten 209 der Grundplatte 204 sich nach außen erstreckend sind jeweils mittig zu einer Längsachse L Ansätze 201 ausgebildet. Die Ansätze 201 weisen jeweils eine erste Bohrung 202 und eine zweite Bohrung 203 auf, die rechtwinklig zur Längsachse L verlaufen.

Mittig zur Längsachse L weisen die Zusatz-Riegelklauen 208 einen Schlitz 205 auf, dessen Tiefe sich bis zur Außenfläche 204a erstreckt.

Die zu der Grundplatte 204 korrespondierende Geräteplatte ist aus Gründen der Vereinfachung in dieser Ausführungsform nicht gezeigt, wobei jedoch anzumerken ist, daß die Form der Geräteplatte im wesentlichen zur Form der Grundplatte 204 korrespondierend ausgebildet ist.

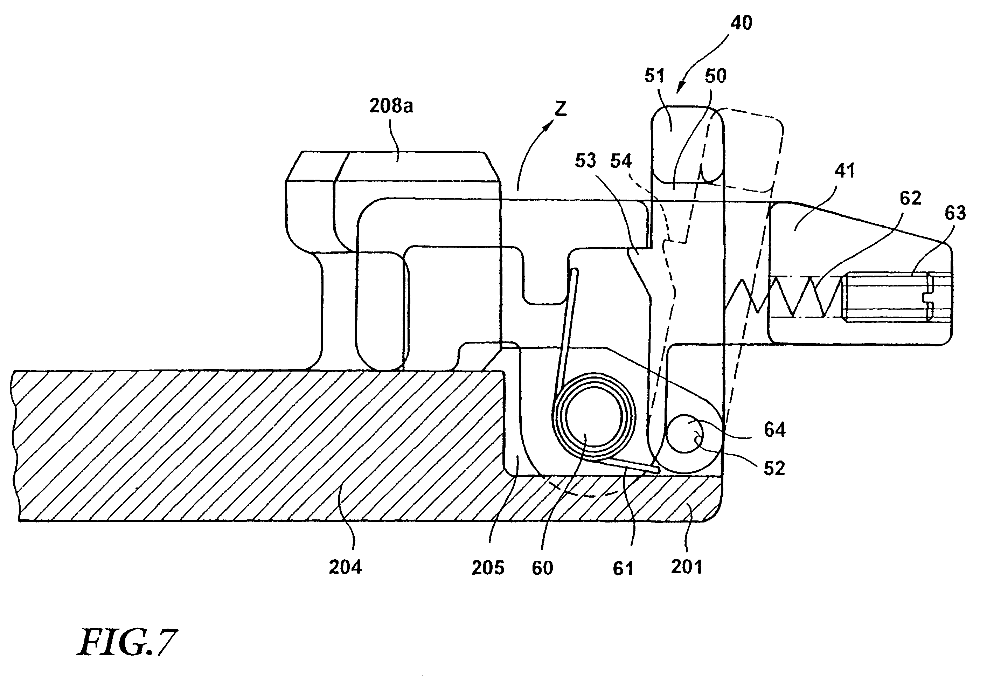

Die Verriegelungsanordnung in dieser Ausführungsform ist allgemein mit 40 bezeichnet und ist in Fig. 7 in einem vergrößerten Maßstab dargestellt.

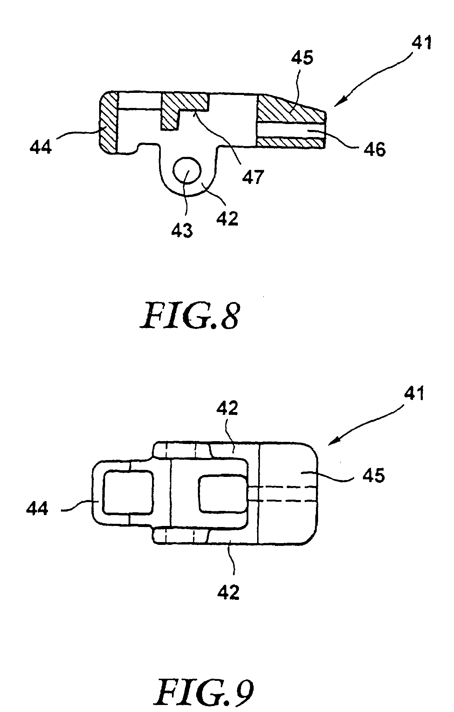

Die Verriegelungsanordnung 40 weist einen Schwenkbügel 41 auf, der in den Fig. 8 und 9 näher dargestellt ist. Der Schwenkbügel 41 besitzt zwei Seitenwände 42, in denen jeweils eine Schwenkbohrung 43 ausgebildet ist. Der Schwenkbügel 41 weist einen Verriegelungsbereich 44 und einen Betätigungsbereich 45 auf. Im Betätigungsbereich 45 ist eine Federaufnahmebohrung 46 ausgebildet. In einem mittigen Bereich weist der Schwenkbügel 41 eine Sperrfläche 47 auf, deren Funktion nachstehend erläutert werden wird.

Ferner umfaßt die Verriegelungsanordnung 40 einen Arretierhebel 50, dessen Aufbau aus den Fig. 6 und 7 zu ersehen ist. Der Arretierhebel 50 weist einen Griffbereich 51 und eine Stiftbohrung 52 auf. In einem im wesentlichen in Höhenrichtung mittleren Bereich ist eine Arretiernase 53 mit einer Arretierfläche 54 vorgesehen.

Der Schwenkbügel 41 ist mittels eines Schwenkstiftes 60 am Ansatz 201 der Grundplatte 204 befestigt, wobei der Schwenkstift 60 (Fig. 6) durch die Schwenkbohrung 43 (Fig. 8) des Schwenkbügels 41 und die erste Bohrung 202 am Ansatz 201 hindurchgeführt ist. Der Schwenkbügel 41 ist so bemessen, daß die Breite des Verriegelungsbereiches 44 der Breite des Schlitzes 205 angepaßt ist. Eine Drehfeder 61 ist um den Schwenkstift 60 angeordnet, wobei ein Schenkel der Drehfeder 61 sich an der Grundplatte 204 und der andere Schenkel der Drehfeder 61 sich an dem Schwenkbügel 41 abstützt. In der Federaufnahmebohrung 46 ist eine Druckfeder 62 angeordnet, deren Federkraft mittels einer Einstellschraube 63 einstellbar ist. Die Federaufnahmebohrung 46 weist in ihrem hinteren Bereich ein Innengewinde auf, das zum Einschrauben der Einstellschraube 63 dient.

Der Arretierhebel 50 ist mittels eines Stiftes 64 mit der Grundplatte 204 verbunden, wobei der Stift 64 durch die Stiftbohrung 52 des Arretierhebels 50 und die zweite Bohrung 203 des Ansatzes 201 der Grundplatte 204 hindurchgeführt ist. Somit ist jeweils der Schwenkbügel 41 und der Arretierhebel 50 für sich mit der Grundplatte 204 schwenkbar verbunden.

Nachstehend wird die Arbeitsweise der Verriegelungsanordnung dieser Ausführungsform beschrieben. Eine Geräteplatte (nicht gezeigt), deren Zusatz-Verschlußklauen ebenfalls einen Schlitz aufweisen, der dem Schlitz 205 der Grundplatte 204 entspricht, wird mit der Grundplatte 204 in der gleichen Weise wie in der ersten Ausführungsform miteinander in Eingriff gebracht, wobei der Schwenkbügel 41 in Richtung eines Pfeiles Z entgegen der Kraft der Drehfeder 61 nach oben verschwenkt ist.

Wenn der Schlitz an den Zusatz-Verschlußklauen der Geräteplatte und der Schlitz 205 der Grundplatte 204 fluchten, wird der Schwenkbügel 41 losgelassen, wodurch sich dieser durch die Federkraft der Drehfeder 61 in den Schlitz 205 hineinbewegt und an der Außenfläche 204a der Grundplatte 204 anstößt. Damit sind die in Eingriff befindliche Zusatz-Verschlußklaue der Geräteplatte und die Zusatz-Riegelklaue 208a der Grundplatte 204 miteinander verriegelt.

Damit ein selbständiges Entriegeln verhindert wird, ist der Arretierhebel 50, der durch die Kraft der Druckfeder 62 in Richtung des Verriegelungsbereiches 44 des Schwenkbügels 41 vorbelastet ist, in der in Fig. 7 als Vollinie dargestellten Stellung befindlich. Diese Stellung wird eingenommen, wenn der Schwenkbügel 41 mit seinem Verriegelungsbereich 44 auf der Grundplatte 204 aufsitzt. Der Sperrfläche 47 des Schwenkbügels 41 liegt auf der Arretierfläche 54 der Arretiernase 53 auf, wodurch eine Bewegung des Schwenkbügels 41 in Richtung des Pfeiles Z auf sichere Weise verhindert wird.

Zum Lösen der Verriegelungsanordnung 40 wird zunächst der Arretierhebel 50 in die in Fig. 7 gestrichelte Position entgegen der Kraft der Druckfeder 62 geschwenkt, so daß die Arretierfläche 54 der Arretiernase 53 des Arretierhebels 50 außer Eingriff von der Sperrfläche 47 des Schwenkbügels 41 gerät. Dadurch kann der Schwenkbügel 41 entgegen der Kraft der Drehfeder 61 in die mit dem Pfeil Z angegebene Richtung verschwenkt werden, so daß der Schwenkbügel 41 außer Eingriff vom Schlitz 205 der Zusatz-Riegelklaue 208a und dem dazu korrespondierenden Schlitz der Zusatz-Verschlußklaue gelangt, so daß die Geräteplatte von der Grundplatte 204 lösbar ist. Modifikationen dieser Ausführungsform sind möglich. So kann zwischen der Druckfeder 62 und dem Arretierhebel 50 ein Stößelstift angeordnet sein, der in der Federaufnahmebohrung geführt wird.

Es ist anzumerken, daß auch Mischformen zwischen den einzelnen Ausführungsformen möglich sind.

## Patentansprüche

1. Kupplungsanordnung für ein Zusatzgerät an einem Fahrzeug, mit
einem ersten Kupplungsstück (2), an dem mindestens zwei radial auswärts verlaufende Riegelklauen (7; 207) angeordnet sind, und
einem zweiten Kupplungsstück (3), an dem mindestens zwei radial einwärts verlaufende Verschlußklauen (18) angeordnet sind,
wobei die Riegelklauen (7; 207) und die Verschlußklauen (18) so angeordnet und dimensioniert sind, daß beim Verdrehen des zweiten Kupplungsstückes (3) relativ zum ersten Kupplungsstück (2) die Riegelklauen (7; 207) die Verschlußklauen (18) in der Art eines Bajonettverschlusses hintergreifen,
**dadurch gekennzeichnet,**
**daß** am ersten Kupplungsstück (2) zusätzlich mindestens zwei Zusatz-Riegelklauen (8; 208) angeordnet sind, die in Radialrichtung nach außen von den Riegeiklauen (7; 207) versetzt sind, und
**daß** am zweiten Kupplungsstück (3) zusätzlich mindestens zwei Zusatz-Verschlußklauen (19) angeordnet sind, die in Radialrichtung nach außen von den Verschlußklauen (18) versetzt sind,
wobei die Zusatz-Riegelklauen (8; 208) und die Zusatz-Verschlußklauen (19) so angeordnet und dimensioniert sind, daß beim Verdrehen des zweiten Kupplungsstückes (3) relativ zu dem ersten Kupplungsstück (2) die Zusatz-Riegelklauen (8; 208) die Zusatz-Verschlußklauen (19) in der Art eines Bajonettverschlusses hintergreifen, um insbesondere Biegekräfte aufzunehmen.

2. Kupplungsanordnung nach Anspruch 1, **dadurch gekennzeichnet, daß** vier Riegelklauen (7a, 7b, 7c, 7d) im Winkel von 90° versetzt angeordnet sind, und daß vier Zusatz-Riegelklauen (8a, 8b, 8c, 8d) im Winkel von 90° versetzt angeordnet sind, wobei
die Riegelklauen (7a, 7b, 7c, 7d) und die Zusatz-Riegelklauen (8a, 8b, 8c, 8d) in Breitenrichtung fluchten.

3. Kupplungsanordnung nach Anspruch 1 oder 2, **dadurch gekennzeichnet, daß** vier Verschlußklauen (18a, 18b, 18c, 18d) im Winkel von 90° versetzt angeordnet sind, und daß vier Zusatz-Verschlußklauen (19a, 19b, 19c, 19d) im Winkel von 90° versetzt angeordnet sind, wobei die Verschlußklauen (18a, 18b, 18c, 18d) und die Zusatz-Verschlußklauen (19a, 19b, 19c, 19d) in Breitenrichtung fluchten.

4. Kupplungsanordnung nach einem der Ansprüche 1 bis 3, **dadurch gekennzeichnet, daß** die Riegelklauen (7; 207), die Zusatz-Riegelklauen (8; 208), die Verschlußklauen (18) und die Zusatz-Verschlußklauen (19) die gleiche Dicke haben.

5. Kupplungsanordnung nach einem der Ansprüche 1 bis 3, **dadurch gekennzeichnet, daß** eine der Riegelklauen (7; 207), eine der Verschlußklauen (18), eine der Zusatz-Riegelklauen (8; 208) oder der Zusatz-Verschlußklauen (19) dicker ausgebildet ist als die entsprechenden übrigen Klauen, und daß entsprechenderweise das Gegenstück der Verschlußklauen (18), der Riegelklauen (7; 207), der Zusatz-Verschlußklauen (19) oder der Zusatz-Riegelklauen (8; 208) dünner ausgebildet ist, um eine ausgewählte Lagezuordnung des ersten Kupplungsstücks (2) zum zweiten Kupplungsstück (3) zu erzielen.

6. Kupplungsanordnung nach einem der Ansprüche 1 bis 5, **dadurch gekennzeichnet, daß** in Radialrichtung versetzt zu den Zusatz-Riegelklauen (8; 208) weitere Zusatz-Riegelklauen und korrespondierend dazu in Radialrichtung versetzt zu den Zusatz-Verschlußklauen (19) weitere Zusatz-Verschlußklauen angeordnet sind.

7. Kupplungsanordnung nach einem der Ansprüche 1 bis 6, **dadurch gekennzeichnet, daß** das erste Kupplungsstück (2) stationär mit dem Fahrzeug verbunden ist und eine Grundplatte (4; 204), die mit einer Halterung (1) des Fahrzeuges verbunden ist und einen Innenring (6; 206), der mit der Grundplatte (6; 206) verbunden ist, aufweist.

8. Kupplungsanordnung nach Anspruch 7, **dadurch gekennzeichnet, daß** die Riegelklauen (7; 207) am Außenumfang des Innenringes (6; 206) und die Zusatz-Riegelklauen (8; 208) in einem radialen Außenbereich einer Außenfläche (4a; 204a) der Grundplatte (4; 204) angeordnet sind.

9. Kupplungsanordnung nach einem der Ansprüche 1 bis 8, **dadurch gekennzeichnet, daß** das zweite Kupplungsstück (3) mit einem Zusatzgerät (16) verbunden ist und auf das erste Kupplungsstück (2) aufsetzbar ist, und eine Geräteplatte (13), die mit dem Zusatzgerät (16) verbunden ist und einen Außenring (17), der mit der Geräteplatte (13) verbunden ist, aufweist.

10. Kupplungsanordnung nach Anspruch 9, **dadurch gekennzeichnet, daß** die Verschlußklauen (8; 208) am Innenumfang des Außenringes (17) und die Zusatz-Verschlußklauen (19) am Außenumfang des Außenringes (17) angeordnet sind.

11. Kupplungsanordnung nach Anspruch 9 oder 10, **dadurch gekennzeichnet, daß** der Außendurchmesser des Innenringes (6; 206) zum Innendurchmesser des Außenringes (17) so angepaßt ist, daß der Außenring (17) durch den Innenring (6; 206) in Axialrichtung geführt wird.

12. Kupplungsanordnung nach einem der Ansprüche 7 bis 11, **dadurch gekennzeichnet, daß** die Dicke der Riegelklauen (7; 207), der Verschlußklauen (18), der Zusatz-Riegelklauen (8; 208) und der Zusatz-Verschlußklauen (19) so dimensioniert ist, daß im gekuppelten Zustand Außenflächen der Riegelklauen (7; 207) und der Zusatz-Riegelklauen (8; 208) an der Innenfläche (13a) der Geräteplatte (13) anliegen und Außenflächen der Verschlußklauen (18) und der Zusatz-Verschlußklauen (19) an der Außenfläche (4a; 204a) der Grundplatte (4; 204) anliegen.

13. Kupplungsanordnung nach einem der Ansprüche 7 bis 11, **dadurch gekennzeichnet, daß** die Riegelklauen (7; 207) und korrespondierend dazu die Verschlußklauen (18) sowie die Zusatzriegelklauen (8; 208) und korrespondierend dazu die Zusatz-Verschlußklauen (19) eine stetig anwachsende Dicke aufweisen, um beim Verdrehen des zweiten Kupplungsstückes (3) zum ersten Kupplungsstück (2) in der Art einer Schraubverbindung die Außenflächen der Riegelklauen (7; 207) und der Zusatzriegelklauen (8; 208) gegen die Innenfläche (13a) der Geräteplatte (13) und die Außenflächen der Verschlußklauen (18) und der Zusatz-Verschlußklauen (19) gegen die Außenfläche (4a; 204a) der Grundplatte (4; 204) zu pressen.

14. Kupplungsanordnung nach einem der Ansprüche 9 bis 13, **dadurch gekennzeichnet, daß** der Außenring (17) drehbar mit der Geräteplatte (13) verbunden ist.

15. Kupplungsanordnung nach einem der Ansprüche 9 bis 14, **dadurch gekennzeichnet, daß** die Grundplatte (4; 204) eine zentrisch zum Innenring (6; 206) angeordnete Durchgangsbohrung (12) aufweist, die sich in Richtung der Außenfläche (4a; 204a) der Grundplatte (4; 204) konisch öffnet,
daß auf einer der Außenfläche (4a; 204a) gegenüberliegenden Fläche der Grundplatte (4; 204) ein Ventil (9) angeordnet ist, dessen federbelasteter Ventilkolben sich in Richtung der Durchgangsbohrung (12) erstreckt, wobei der Ventilkolben die Durchflußmenge eines Arbeitsmediums steuert, das dem Zusatzgerät (16) zugeführt wird, und
daß an der Geräteplatte (13) zentrisch zum Außenring (17) ein Steuerstößel (22) befestigt ist, der in die Durchgangsbohrung (12) eintritt und den federbelasteten Ventilkolben in Axialrichtung verschiebt zum Einstellen einer bestimmten Durchflußmenge des Arbeitsmediums.

16. Kupplungsanordnung nach Anspruch 15, **dadurch gekennzeichnet, daß** im abgenommenen Zustand des aufsetzbaren Kupplungsstückes (3) der Ventilkolben des Ventils (9) den Durchfluß des Arbeitsmediums durch das Ventil (9) sperrt.

17. Kupplungsanordnung nach Anspruch 15 und 16, **dadurch gekennzeichnet, daß** verschiedene Zusatzgeräte (16) verschieden lange Steuerstößel (22) aufweisen, um die Zuführung des Arbeitsmediums für das entsprechende Zusatzgerät (16) einzustellen.

18. Kupplungsanordnung nach einem der Ansprüche 9 bis 14, **dadurch gekennzeichnet,**
**daß** die Grundplatte (4; 204) eine zentrisch zum Innenring (6; 206) angeordnete Durchgangsbohrung (12) aufweist, die sich in Richtung der Außenfläche (4a; 204a) der Grundplatte (4; 204) konisch öffnet,
**daß** auf einer der Außenfläche (4a; 204a) gegenüberliegenden Fläche der Grundplatte (4; 204) ein elektrisches oder elektronisches Bauelement mit einem federbelasteten Schaltstößel zum Betätigen des elektrischen oder elektronischen Bauelementes angeordnet ist, und
**daß** an der Geräteplatte (13) zentrisch zum Außenring (17) ein Steuerstößel (22) befestigt ist, der in die Durchgangsbohrung (12) eintritt und den federbelasteten Schaltstößel in Axialrichtung verschiebt zum Betätigen des elektrischen oder elektronischen Bauelementes.

19. Kupplungsanordnung nach Anspruch 18, **dadurch gekennzeichnet, daß** das elektrische Bauelement ein Schalter ist, der in Abhängigkeit von der Stellung des Schaltstößels ein- oder ausgeschaltet ist.

20. Kupplungsanordnung nach Anspruch 18, **dadurch gekennzeichnet, daß** das elektrische Bauelement ein Potentiometer ist, das in Abhängigkeit von der Stellung des Schaltstößels eine bestimmte Spannung abgibt, und
daß verschiedene Zusatzgeräte (16) verschieden lange Steuerstößel (22) aufweisen, um für verschiedene Zusatzgeräte (16) verschieden große Spannungen vom Potentiometer abgreifen zu können.

21. Kupplungsanordnung nach einem der Ansprüche 9 bis 20, **gekennzeichnet durch** eine Verriegelung zum Sperren einer Drehbewegung des aufsetzbaren Kupplungsstückes (3) relativ zum stationären Kupplungsstück (2).

22. Kupplungsanordnung nach Anspruch 21, **dadurch gekennzeichnet, daß** die Verriegelung einen U-förmigen Verriegelungsbügel (30) aufweist, dessen Schenkel schwenkbar über erste Achsen (31) mit Verriegelungshebeln (32) verbunden sind,
daß jeder Verriegelungshebel (32) schwenkbar über zweite Achsen (33) mit einer (8d) der Zusatzriegelklauen (8; 208) verbunden ist,
daß der Verriegelungsbügel (30) mittels Drehfedern (36) in Richtung der Geräteplatte (13) vorbelastet ist, und
daß am Außenumfang der Grundplatte (4; 204) Blattfedern (34) angeordnet sind, die die Verriegelungshebel (32) je nach Verschwenkungswinkel um die zweiten Achsen (33) in eine Verriegelungsstellung oder eine Entriegelungsstellung vorbelasten.

23. Kupplungsanordnung nach Anspruch 21, **dadurch gekennzeichnet,**
**daß** an einer Grundplatte (204) des stationären Kupplungsstücks (2) ein Schwenkbügel (41) angeordnet ist, der in einer Verriegelungsstellung in einen Schlitz (205) der Zusatz-Riegelklaue (208a), der sich mit einem Schlitz der Zusatz-Verschlußklaue deckt, eingreift, und der aus der Verriegelungsstellung in eine Entriegelungsstellung schwenkbar ist, und
**daß** an der Grundplatte (204) ein Arretierhebel (50) angeordnet ist, der in eine Arretierstellung bringbar ist zum Arretieren des Schwenkbügels (41) in dessen Verriegelungsstellung.

24. Kupplungsanordnung nach Anspruch 23, **dadurch gekennzeichnet,**
**daß** die Grundplatte (204) mindestens einen Ansatz (201) im Bereich der Zusatz-Riegelklaue (208a) aufweist,
**daß** der Ansatz (201) quer zur Längsachse (L) der Grundplatte (204) verlaufend eine erste Bohrung (202) und eine zweite Bohrung (203) aufweist, die in Richtung der Längsachse (L) um einen vorbestimmten Abstand beabstandet sind,
**daß** der Schwenkbügel (41) mit einem Schwenkstift (60) und der Arretierhebel (60) mit einem Stift (64) mit der Grundplatte (204) verbunden sind,
**daß** der Schwenkbügel (41) mittels einer Drehfeder (61) in Richtung der Verriegelungsstellung vorbelastet ist, und
**daß** der Arretierhebel (50) mittels einer Druckfeder (62) am Schwenkbügel (41) in Richtung der Arretierstellung vorbelastet ist.

25. Kupplungsanordnung nach Anspruch 24, **dadurch gekennzeichnet, daß** der Arretierhebel (50) eine Arretiernase (53) mit einer Arretierfläche (54) aufweist, die in der Arretierstellung an eine Sperrfläche (47) des Schwenkbügels (41) angreift.

## Claims

1. Coupling arrangement for an implement on a vehicle, with
a first coupling piece (2) on which at least two radially outwards extending catch claws (7; 207) are arranged, and
a second coupling piece (3) on which at least two radially inwards extending locking claws (18) are arranged,
the catch claws (7; 207) and the locking claws (18) being arranged and dimensioned so that upon a twist of the second coupling piece (3) with respect to the first coupling piece (2) the catch claws (7; 207) reach behind the locking claws (18) in the manner of a bayonet coupling,
**characterized in that**
at least two additional catch claws (8; 208), which are located radially outwards from the catch claws (7; 207), are additionally arranged on the first coupling piece (2), and
at least two additional locking claws (19), which are located radially outwards from the locking claws (18), are additionally arranged on the second coupling piece (3),
the additional catch claws (8; 208) and the additional locking claws (19) being arranged and dimensioned so that upon a twist of the second coupling piece (3) with respect to the first coupling piece (2) the additional catch claws (8; 208) reach behind the additional locking claws (19) in the manner of a bayonet coupling, in order to absorb, in particular, bending forces.

2. Coupling arrangement according to Claim 1, **characterized in that** four catch claws (7a, 7b, 7c, 7d) are pitched at 90° intervals and four additional catch claws (8a, 8b, 8c, 8d) are pitched at 90° intervals, with the catch claws (7a, 7b, 7c, 7d) and the additional catch claws (8a, 8b, 8c, 8d) in alignment in the direction of their width.

3. Coupling arrangement according to Claim 1 or Claim 2, **characterized in that** four locking claws (18a, 18b, 18c, 18d) are pitched at 90° intervals and four additional locking claws (19a, 19b, 19c, 19d) are pitched at 90° intervals, with the locking claws (18a, 18b, 18c, 18d) and the additional catch claws (19a, 19b, 19c, 19d) in alignment in the direction of their width.

4. Coupling arrangement according to any one of Claims 1 to 3, **characterized in that** the catch claws (7; 207), additional catch claws (8; 208), locking claws (18) and additional locking claws (19) have the same thickness.

5. Coupling arrangement according to any one of Claims 1 to 3, **characterized in that** one of the catch claws (7; 207), one of the locking claws (18), one of the additional catch claws (8; 208) or [one] of the additional locking claws (19) is thicker than the others of its kind, and **in that** its counterpart among the locking claws (18), catch claws (7; 207), additional locking claws (19) or additional catch claws (8; 208), respectively, is made thinner, in order to obtain a selected orientation of the first coupling piece (2) with respect to the second coupling piece (3).

6. Coupling arrangement according to any one of Claims 1 to 5, **characterized in that** further additional catch claws are arranged radially [outwards] from the additional catch claws (8; 208), and further additional locking claws are correspondingly arranged radially [outwards] from the additional locking claws (19).

7. Coupling arrangement according to any one of Claims 1 to 6, **characterized in that** the first coupling piece (2) is permanently attached to the vehicle, and has a baseplate (4; 204) attached to a bracket (1) of the vehicle and an inner ring (6; 206) attached to the baseplate [4; 204].

8. Coupling arrangement according to Claim 7, **characterized in that** the catch claws (7; 207) are arranged on the outer circumference of the inner ring (6; 206), and the additional catch claws (8; 208) are arranged in a radially outer region of an outer surface (4a; 204a) of the baseplate (4; 204).

9. Coupling arrangement according to any one of Claims 1 to 8, **characterized in that** the second coupling piece (3) is attached to an implement (16) and is mountable on the first coupling piece (2), and has an accessory plate (13) attached to the implement (16) and an outer ring (17) attached to the accessory plate (13).

10. Coupling arrangement according to Claim 9, **characterized in that** the locking claws (8; 208) are arranged on the inner circumference of the outer ring (17), and the additional locking claws (19) are arranged on the outer circumference of the outer ring (17).

11. Coupling arrangement according to Claim 9 or Claim 10, **characterized in that** the outer diameter of the inner ring (6; 206) is adapted to the inner diameter of the outer ring (17) so that the outer ring (17) is axially guided by the inner ring (6; 206).

12. Coupling arrangement according to any one of Claims 7 to 11, **characterized in that** the thickness of the catch claws (7; 207), locking claws (18), additional catch claws (8; 208) and additional locking claws (19) is chosen so that in the coupled condition outer surfaces of the catch claws (7; 207) and additional catch claws (8; 208) abut on the inner surface (13a) of the accessory plate (13) and outer surfaces of the locking claws (18) and additional locking claws (19) abut on the outer surface (4a; 204a) of the baseplate (4; 204).

13. Coupling arrangement according to any one of Claims 7 to 11, **characterized in that** the catch claws (7; 207) and correspondingly thereto the locking claws (18), and the additional catch claws (8; 208) and correspondingly thereto the additional locking claws (19), have a thickness that steadily increases so as to press the outer surfaces of the catch claws (7; 207) and of the additional catch claws (8; 208) against the inner surface (13a) of the accessory plate (13), and the outer surfaces of the locking claws (18) and of the additional locking claws (19) against the outer surface (4a; 204a) of the baseplate (4; 204), in the manner of a screw coupling, when the second coupling piece (3) is twisted with respect to the first coupling piece (2).

14. Coupling arrangement according to any one of Claims 9 to 13, **characterized in that** the outer ring (17) is rotatably attached to the accessory plate (13).

15. Coupling arrangement according to any one of Claims 9 to 14, **characterized in that** the baseplate (4; 204) has a through bore (12) which is located centrally with respect to the inner ring (6; 206) and has a taper widening towards the outer surface (4a; 204a) of the baseplate (4; 204),
**in that** a valve (9) whose spring-loaded piston extends in the direction of the through bore (12) is arranged on an opposite surface of the baseplate (4; 204) to the outer surface (4a; 204a), the valve piston controlling the flow of a working medium supplied to the implement (16), and
**in that** a control plunger (22) which is attached to the accessory plate (13) centrally with respect to the outer ring (17) enters the through bore (12) and displaces the spring-loaded valve piston in the axial direction to establish a specific flow of working medium.

16. Coupling arrangement according to Claim 15, **characterized in that** when the mountable coupling piece (3) is removed, the flow of working medium through the valve (9) is shut off by the piston of the valve (9).

17. Coupling arrangement according to Claims 15 and 16, **characterized in that** different implements (16) have control plungers (22) of different lengths so as to establish the requisite supply of working medium for the implement (16) concerned.

18. Coupling arrangement according to any one of Claims 9 to 14, **characterized in that** the baseplate (4; 204) has a through bore (12) which is located centrally with respect to the inner ring (6; 206) and has a taper widening towards the outer surface (4a; 204a) of the baseplate (4; 204),
**in that** an electrical or electronic component with a spring-loaded switch plunger to operate the electrical or electronic component is arranged on an opposite surface of the baseplate (4; 204) to the outer surface (4a; 204a), and
**in that** a control plunger (22) which is attached to the accessory plate (13) centrally with respect to the outer ring (17) enters the through bore (12) and displaces the spring-loaded switch plunger in the axial direction to operate the electrical or electronic component.

19. Coupling arrangement according to Claim 18, **characterized in that** the electrical component is a switch which is switched on or off according to the position of the switch plunger.

20. Coupling arrangement according to Claim 18, **characterized in that** the electrical component is a potentiometer delivering a specific voltage according to the position of the switch plunger, and
**in that** different implements (16) have control plungers (22) of different lengths so that different voltages can be tapped from the potentiometer for different implements (16).

21. Coupling arrangement according to any one of Claims 9 to 20, **characterized by** a barring device for barring rotation of the mountable coupling piece (3) with respect to the fixed coupling piece (2).

22. Coupling arrangement according to Claim 21, **characterized in that** the barring device has a U-shaped yoke (30) whose arms are pivotably connected by first hinge pins (31) to barring levers (32),
**in that** each barring lever (32) is pivotably connected by second hinge pins (33) to one (8d) of the additional catch claws (8; 208),
**in that** the yoke (30) is urged towards the accessory plate (13) by torsion springs (36), and
**in that** leaf springs (34) arranged on the outer circumference of the baseplate (4; 204) urge the barring levers (32) into a barring position or an unbarring position depending on the pivoting angle about the two hinge pins (33).

23. Coupling arrangement according to Claim 21, **characterized in that** a tilting yoke (41) arranged on a baseplate (204) of the fixed coupling piece (2) engages in a barring position into a slit (205) in the additional catch claw (208a) that coincides with a slit in the additional locking claw, and is tiltable out of the barring position into an unbarring position, and
**in that** a locking lever (50) arranged on the baseplate (204) is shiftable into a locking position to lock the tilting yoke (41) in its barring position.

24. Coupling arrangement according to Claim 23, **characterized in that** the baseplate (204) has at least one extension (201) in the region of the additional catch claw (208a),
**in that** the extension (201) has a first bore (202) and a second bore (203) both extending at right angles to the longitudinal axis (L) of the baseplate (204), spaced apart by a predetermined distance in the direction of the longitudinal axis (L),
**in that** the tilting yoke (41) is connected to the baseplate (204) by a pivot pin (60), and the locking lever [50] is connected thereto by a pin (64),
**in that** the tilting yoke (41) is urged towards the barring position by a torsion spring (61), and
**in that** the locking lever (50) is urged towards the locked position by a compression spring (62) on the tilting yoke (41).

25. Coupling arrangement according to Claim 24, **characterized in that** the locking lever (50) has a catch (53) with a stop face (54) which in the locked position abuts on a barring face (47) of the tilting yoke (41).

## Revendications

1. Dispositif d'accouplement d'un appareil additionnel sur un véhicule, comportant :
un premier élément d'accouplement (2) sur lequel sont disposées au moins deux griffes de verrouillage (7, 207) s'étendant radialement vers l'extérieur, et
au moins un deuxième élément d'accouplement (3) sur lequel sont disposées au moins deux griffes de fermeture (18),
les griffes de verrouillage (7; 207) et les griffes de fermeture (18) étant disposées de manière que, lors de la rotation du deuxième élément d'accouplement (3) par rapport au premier élément d'accouplement (2), les griffes de verrouillage (7; 20) saisissent par l'arrière les griffes de fermeture (18), à la façon d'une fermeture à baïonnette,
**caractérisé en ce que**
sur le premier élément d'accouplement (2) sont en plus disposées au moins deux griffes de verrouillage additionnelles (8; 208) décalées en direction radiale vers l'extérieur par rapport aux griffes de verrouillage (7; 207), et
**en ce que** sur le deuxième élément d'accouplement (3) sont disposées au moins deux griffes de fermeture additionnelles (19) qui sont décalées en direction radiale vers l'extérieur vis-à-vis des griffes de fermeture (18),
les griffes de verrouillage additionnelles (8; 208) et les griffes de fermeture additionnelles (19) étant disposées et dimensionnées de manière que, lors de la rotation du deuxième élément d'accouplement (3) par rapport au premier élément d'accouplement (2), les griffes de verrouillage additionnelles (8; 208) saisissent par l'arrière les griffes de fermeture additionnelles (19) à la façon d'une fermeture à baïonnette, afin en particulier de supporter les efforts de flexion.

2. Dispositif d'accouplement selon la revendication 1, **caractérisé en ce que** quatre griffes de verrouillage (7a, 7b, 7c, 7d) sont disposées de façon décalée d'angles de 90° et **en ce que** quatre griffes de verrouillage additionnelles (8a, 8b, 8c, 8d) sont disposées de façon décalée d'angles de 90°,
les griffes de verrouillage (7a, 7b, 7c, 7d) et les griffes de verrouillage additionnelles (8a, 8b, 8c, 8d) étant alignées dans la direction de la largeur.

3. Dispositif d'accouplement selon la revendication 1, **caractérisé en ce que** quatre griffes de fermeture (18a, 18b, 18c, 18d) sont disposées de façon décalée d'angles de 90° et **en ce que** quatre griffes de fermeture additionnelles (19a, 19b, 19c, 19d) sont décalée d'angles de 90°,
les griffes de fermeture (18a, 18b, 18c, 18d) et les griffes de fermeture additionnelles (19a, 19b, 19c, 19d) étant alignées dans la direction de la largeur.

4. Dispositif d'accouplement selon l'une des revendications 1 à 3, **caractérisé en ce que** les griffes de verrouillage (7; 207), les griffes de verrouillage additionnelles (8; 208), les griffes de fermeture (18) et les griffes de fermeture additionnelles (19) ont la même épaisseur.

5. Dispositif d'accouplement selon l'une des revendications 1 à 3, **caractérisé en ce que** l'une des griffes de verrouillage (7; 207), l'une des griffes de fermeture (18), l'une des griffes de verrouillage additionnelles (8; 208) ou des griffes de fermeture additionnelles (19) est plus épaisse que les autres griffes correspondantes et **en ce que**, de manière correspondante, la pièce conjuguée des griffes de fermeture (18), des griffes de verrouillage (7; 207), des griffes de fermeture additionnelles (19) ou des griffes de verrouillage additionnelles (8; 208) est plus mince, afin d'obtenir une association de positions sélectionnée entre le premier élément d'accouplement (2) et le deuxième élément d'accouplement (3).

6. Dispositif d'accouplement selon l'une des revendications 1 à 5, **caractérisé en ce que**, de façon décalée en direction radiale par rapport aux griffes de verrouillage additionnelles (8; 208), sont disposées d'autres griffes de verrouillage additionnelles et, de manière correspondante à cela, décalées en direction radiale par rapport aux griffes de fermeture additionnelles (19) sont disposées d'autres griffes de fermeture additionnelles.

7. Dispositif d'accouplement selon l'une des revendications 1 à 6, **caractérisé en ce que** le premier élément d'accouplement (2) est relié de façon stationnaire au véhicule et présente une plaque de base (4; 204) reliée à un support (1) du véhicule et une bague intérieure (6; 206) reliée à la plaque de base (6; 206).

8. Dispositif d'accouplement selon la revendication 7, **caractérisé en ce que** les griffes de verrouillage (7; 207) sont disposées sur la périphérie extérieure de la bague intérieure (6; 206) et les griffes de verrouillage additionnelles (8; 208) sont disposées dans une zone extérieure radiale d'une surface extérieure (4a; 204a) de la plaque de base (4; 204).

9. Dispositif d'accouplement selon l'une des revendications 1 à 8, **caractérisé en ce que** le deuxième élément d'accouplement (3) est relié à un appareil additionnel (16) et susceptible d'être placé sur le premier élément d'accouplement (2), et présente une plaque d'appareil (13) reliée à l'appareil additionnel (16) et présente une bague extérieure (17) reliée à la plaque d'appareil (13).

10. Dispositif d'accouplement selon la revendication 9, **caractérisé en ce que** les griffes de fermeture (8; 208) sont disposées sur la périphérie intérieure de la bague extérieure (17) et les griffes de fermeture additionnelles (19) sont disposées sur la périphérie extérieure de la bague extérieure (17).

11. Dispositif d'accouplement selon la revendication 9 ou 10, **caractérisé en ce que** le diamètre extérieur de la bague intérieure (6, 206) est adapté au diamètre intérieur de la bague extérieure (17) de manière que la bague extérieure (17) soit guidée en direction axiale par la bague intérieure (6, 206).

12. Dispositif d'accouplement selon l'une des revendications 7 à 11, **caractérisé en ce que** l'épaisseur des griffes de verrouillage (7; 207), des griffes de fermeture (18), des griffes de verrouillage additionnelles (8; 208) et des griffes de fermeture additionnelles (19) est dimensionnée de manière qu'à l'état accouplé les faces extérieures des griffes de verrouillage (7; 207) et des griffes de verrouillage additionnelles (8; 208) s'appuient sur la surface intérieure (13a) de la plaque d'appareil (13) et que les faces extérieures des griffes de fermeture (18) et des griffes de fermeture additionnelles (19) s'appuient sur la face extérieure (4a; 204a) de la plaque de base (4; 204).

13. Dispositif d'accouplement selon l'une des revendications 7 à 11, **caractérisé en ce que** les griffes de verrouillage (7; 207) et, de manière correspondante à cela, les griffes de fermeture (18) ainsi que les griffes de verrouillage additionnelles (8; 208) et, de manière correspondante à cela, les griffes de fermeture additionnelles (19) présentent une épaisseur qui augmente de façon constante pour que, lors de la rotation du deuxième élément d'accouplement (3) par rapport au premier élément d'accouplement (2) à la manière d'une liaison vissée, les faces extérieures des griffes de verrouillage (7; 207) et des griffes de verrouillage additionnelles (8; 208) pressent contre la face intérieure (13a) de la plaque intérieure (13) et que les faces extérieures des griffes de fermeture (18) et des griffes de fermeture additionnelles (18) pressent contre la face extérieure (4a; 204a) de la plaque de base (4; 204).

14. Dispositif d'accouplement selon l'une des revendications 9 à 13, **caractérisé en ce que** la bague extérieure (17) est reliée, de façon à pouvoir tourner, à la plaque d'appareil (13).

15. Dispositif d'accouplement selon l'une des revendications 9 à 14, **caractérisé en ce que** la plaque de base (4; 204) présente un trou de passage (12) disposé centralement par rapport à la bague intérieure (6; 206), trou s'ouvrant de façon conique dans la direction de la face extérieure (4a; 204a) de la plaque de base (4; 204),
**en ce que** sur une face opposée à la face extérieure (4a; 204a) de la plaque de base (4; 204) est disposée une soupape (9) dont le piston de soupape sollicité par un ressort s'étend dans la direction du trou de passage (12), le piston de soupape commandant le débit d'un fluide de travail amené à l'appareil additionnel (16),
**en ce que** sur la plaque d'appareil (13) est fixé centralement par rapport à la bague extérieure (17) un poussoir de commande (22) qui pénètre dans le trou de passage (12) et qui déplace en direction axiale le piston de soupape chargé par un ressort pour régler un débit déterminé de fluide de travail.

16. Dispositif d'accouplement selon la revendication 15, **caractérisé en ce que**, lorsque l'élément d'accouplement (3) susceptible d'être posé est enlevé, la tige de piston de la soupape (9) bloque l'écoulement du fluide de travail à travers la soupape (9).

17. Dispositif d'accouplement selon les revendications 15 et 16, **caractérisé en ce que** différents appareils additionnels 16 présentent des poussoirs de commande (22) de longueurs différentes, afin de régler l'amenée en fluide de travail pour l'appareil additionnel (16) correspondant.

18. Dispositif d'accouplement selon l'une des revendications 9 à 14, **caractérisé en ce que**
la plaque de base (4; 204) présente un trou de passage (12) centré par rapport à la bague intérieure (6; 206), trou qui s'ouvre de façon conique dans la direction de la face extérieure (4a; 204a) de la plaque de base (4; 204),
**en ce que** sur une surface opposée à la face extérieure (4a, 204a) de la plaque de base (4; 204) est disposé un composant électrique ou électronique comportant un poussoir de commutation chargé par un ressort pour effectuer l'actionnement du composant électrique ou électronique, et
**en ce que** sur la plaque d'appareil (13), centralement par rapport à la bague extérieure (17), est fixé un poussoir de commande (22) qui pénètre dans le trou de passage (12) et déplace en direction axiale le poussoir de manoeuvre chargé par un ressort pour assurer l'actionnement du composant électrique ou électronique.

19. Dispositif d'accouplement selon la revendication 18, **caractérisé en ce que** le composant électrique est un interrupteur qui est mis en service ou hors service en fonction de la position du poussoir de manoeuvre.

20. Dispositif d'accouplement selon la revendication 18, **caractérisé en ce que** le composant électrique est un potentiomètre qui fournit une tension déterminée en fonction de la position du poussoir de manoeuvre, et
**en ce que** différents appareils additionnels (16) présentent des poussoirs de commande (22) de longueurs différentes, afin de pouvoir prélever du potentiomètre des tensions de valeurs différentes pour différents appareils additionnels (16).

21. Dispositif d'accouplement selon l'une des revendications 9 à 20, **caractérisé par** un verrouillage pour effectuer le blocage d'un mouvement de rotation de l'élément d'accouplement (3) pouvant être posé, par rapport à l'élément d'accouplement stationnaire (2).

22. Dispositif d'accouplement selon la revendication 21, **caractérisé en ce que** le verrouillage présente un étrier de verrouillage (30) en forme de U dont les branches sont reliées, par des premiers axes de pivotement (31), à des leviers de verrouillage (32),
**en ce que** chaque levier de verrouillage (32) est relié de façon pivotante par des deuxièmes axes (33) à une (8d) des griffes de verrouillage additionnelles (8; 208),
**en ce que** l'étrier de verrouillage (30) est préchargé par des ressorts de torsion (36) dans la direction de la plaque d'appareil (13), et
**en ce que** sur la périphérie extérieure de la plaque de base (4; 204) sont disposés des ressorts à lame (34) qui préchargent en une position de verrouillage ou une position de déverrouillage les leviers de verrouillage (32), selon l'angle de pivotement autour des deuxièmes axes (33).

23. Dispositif d'accouplement selon la revendication 21, **caractérisé en ce que** sur une plaque de base (204) de l'élément d'accouplement stationnaire (2) est disposé un étrier pivotant (41) qui s'engage dans une position de verrouillage dans une fente (205) de la griffe de verrouillage additionnelle (208a) qui est en coïncidence avec une fente de la griffe de fermeture additionnelle, et qui est susceptible de pivoter de la position de verrouillage à une position de déverrouillage, et
**en ce que** sur la plaque de base (204) est disposé un levier de blocage (50) susceptible d'être mis en prise en une position de blocage pour assurer le blocage de l'étrier de pivotement (41) à sa position de verrouillage.

24. Dispositif d'accouplement selon la revendication 23, **caractérisé en ce que** la plaque de base (204) présente au moins un appendice (201) dans la zone de la griffe de verrouillage additionnelle (208a), **en ce que** l'appendice (201) présente, transversaux par rapport à l'axe longitudinal (L) de la plaque de base (204), un premier perçage (202) et un deuxième perçage (203) qui sont espacés l'un de l'autre d'une distance prédéterminée dans la direction de l'axe longitudinal (L),
**en ce que** l'étrier pivotant (41) est relié à une tige de pivotement (60) et le levier de blocage (50) est relié par une tige (64) à la plaque de base (204),
**en ce que** l'étrier pivotant (41) est préchargé dans la direction de la position de verrouillage à l'aide d'un ressort de torsion (61), et **en ce que** le levier de blocage (50) est préchargé dans la direction de la position de blocage sur l'étrier pivotant (41) au moyen d'un ressort de compression (62).

25. Dispositif d'accouplement selon la revendication 24, **caractérisé en ce que** le levier de blocage (50) présente un ergot de blocage (53) ayant une surface de blocage (54) qui, à la position de blocage, vient en prise sur une surface de blocage (47) de l'étrier pivotant (41).
